# EUROPEAN PATENT SPECIFICATION

(11) **EP 3 610 702 B1**
(45) Date of publication and mention of the grant of the patent: **16.09.2020**
(21) Application number: 18714786.3
(22) Date of filing: 06.04.2018
(51) Int. Cl.: H05B 47/18, H04L 12/40

(54) **SYSTEM AND METHOD FOR ENHANCING DATA RATES OVER ADDRESSABLE LIGHTING NETWORKS**
SYSTEM UND VERFAHREN ZUR ERHÖHUNG VON DATENRATEN ÜBER ADRESSIERBARE BELEUCHTUNGSNETZWERKE
SYSTÈME ET PROCÉDÉ PERMETTANT D'AMÉLIORER LES DÉBITS DE DONNÉES SUR DES RÉSEAUX D'ÉCLAIRAGE ADRESSABLES

(30) Priority: 10.04.2017 EP 17165649
(43) Date of publication of application: 19.02.2020
(73) Proprietor: Signify Holding B.V., 5656 AE Eindhoven (NL)
(72) Inventor: ABBO, Anteneh, Alemu, 5656 AE Eindhoven (NL); HAVERLAG, Marco, 5656 AE Eindhoven (NL); WOUTERS, Petrus, Nicolaas, 5656 AE Eindhoven (NL)
(74) Representative: Verweij, Petronella Daniëlle
(86) International application number: PCT/EP2018/058837
(87) International publication number: WO 2018/189046

(56) References cited:
- DE-A1-102005 057 309
- US-A1- 2015 008 842
- US-A1- 2016 242 267
- "DALI Manual", 1 November 2001 (2001-11-01), XP002224999, the whole document

## Description

### FIELD OF THE INVENTION

The invention relates to the field of data communication in addressable lighting networks based on the Digital Addressable Lighting Interface (DALI) communication standard.

### BACKGROUND OF THE INVENTION

DALI is a dedicated protocol for lighting control. A DALI system may comprise a control gear, control devices and bus power supplies. The control gear usually contains a power control circuit to drive lamps or luminaires, or some other type of output such as on/off switching or analogue signals. The control devices can provide information to other control devices (such as light intensity information), and can send commands to the control gear. Furthermore, input devices are a type or a part of a control device that provides some information to the system, such as a button press or movement detection. Additionally, application controllers are a type or a part of a control device and are the decision makers in a DALI system - for example, they can send commands to the control gear to modify the lighting. At least one bus power supply can be present in a DALI system. This is necessary to allow both communications on the bus, as well as to power any bus-powered devices. The bus power supply does not need to be a separate unit - it could be part of another device such as a light emitting diode (LED) driver or a sensor.

DALI communication standard is very widely utilized in modern lighting control systems. While its common usage is for room/floor/building level lighting control, new applications are also emerging where it is used for connecting devices within luminaires. This new application is made possible by the emergence of drivers that include DALI power supply, e.g., Philips Advance Xitanium SR LED Driver.

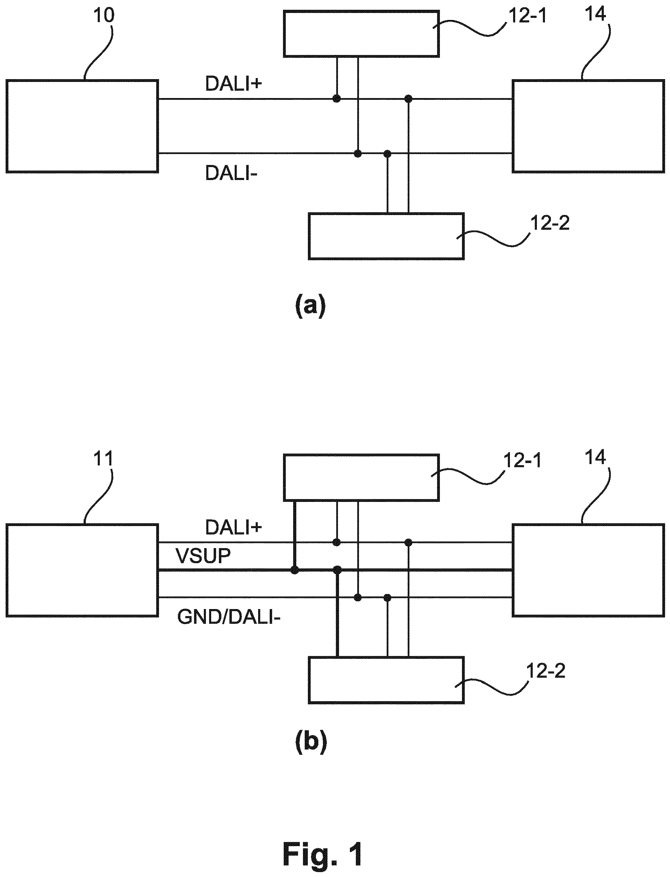

Fig. 1 shows typical luminaire electrical architectures (a) and (b) for indoor and, respectively, outdoor luminaires based on DALI drivers (e.g. Xitanium-SR drivers). In the indoor case (a), a DALI master 14 and slave modules 12-1 and 12-2 are powered via a DALI bus system with positive and negative connection lines DALI+ and DALI- from a DALI power supply (not shown) provided in a DALI driver 10 (e.g. a DALI LED driver). In the outdoor case (b), an extra power supply is integrated in the DALI driver 10 to handle high-power demand through a separate voltage supply line VSUP, while the negative connection line DALI- may be grounded (GND).

Although robust with respect to noise and interference, one of the main limitations of the DALI protocol is its low data rate (1200 b/s), as can be gathered e.g. from DALI application note AN1465 of Microchip technology Inc., 2012, or from the DALI Manual of the DALI Activity Group of ZVEI's Division Luminaires, Frankfurt, 2001.

In traditional applications where simple lighting control commands are sent over a long DALI cable, this data rate is sufficient. However, new use cases such as software upgrade, reading out status data and communicating with high-speed data sources (audio or video) will suffer from this data rate restriction. Moreover, communication overhead of the DALI protocol is a concern which reduces the effective data rate to about 400 b/s = 33.3% x 1200 b/s.

US patent application US2015/008842 A1 recognizes the need for a higher speed communication than DALI and discloses an LED based illumination device that includes a receiver and a transmitter for communications adhering to a lighting control communications protocol such as DALI and a high speed communications protocol, wherein the high speed communications protocol may take the form of e.g. a IEEE802.15.4 or IEEE802.11 link.

Furthermore from the automotive field CAN control devices are known that can self-configure for operation on low-speed or high-speed CAN busses, for example from DE 102005057309A1 discloses a self-configuring CAN bus control device that may be utilized on either a low-speed fault tolerant 5.5 V CAN bus or on a high-speed 5.0 V CAN bus.

### SUMMARY OF THE INVENTION

It is an object of the present invention to provide a simple and reliable signaling approach to allow increased data rates on addressable low-rate lighting networks such as the DALI network.

This object is achieved by a transmitting apparatus as claimed in claim 1, by a slave device as claimed in claim 4, by a receiving apparatus as claimed in claim 5, by a master device as claimed in claim 9, by a luminaire device as claimed in claim 11, by a system as claimed in claim 12, by a transmitting method as claimed in claim 13, by a receiving method as claimed in claim 14, and by a computer program product as claimed in claim 15.

Accordingly, a master device of a data bus of the addressable lighting network is notified about a need for high-speed data transmission in order to trigger a clamping of the transmission voltage level on the data bus below a lowest detection threshold level used for low-speed data transmission on the data bus. Then, a mode control signal is activated in response to a detected request for high-speed transmission on the data bus and the transmission voltage on the data bus is clamped to a level below the lowest detection threshold level, and a high-speed data transmission via the data bus is initiated in response to a detection of a reduced voltage level on the data bus, which is below the lowest detection threshold level. Thereby, the data rate on the data bus can be increased while the signaling system can be kept compatible to the standard (low-speed) system operation. The main concept relies on the idea of clamping the bus voltage to a level below the lowest threshold voltage (e.g., 6.5V) so that normal network devices do not get disturbed. To enable this, a protocol maybe provided where a bus master device (e.g., a DALI bus master) is notified of the need for high-speed communication by one/more of the slave devices (e.g., DALI slaves) so that it activates the bus-clamp control. The requesting slave device would subsequently activate a high-speed signalling to transfer the data to the master device. On the receiving side, the detection threshold is lowered to match the new operating voltage range and appropriate decoding of the received signal is done. In one embodiment, a high-speed half-duplex Universal Asynchronous Receiver Transmitter (UART) protocol may be used to exploit widely available microcontroller peripherals as physical layer.

According to a first option, the apparatus may comprise a multiplexer for selectively providing to the date bus either low-speed transmission data generated by a low-speed encoder or high-speed transmission data generated by a high-speed encoder to a bus driver connected to the data bus. Thereby, circuit complexity can be reduced by using the same bus driver for low-speed and high-speed transmission.

According to a second option which can be combined with the first option, the notification unit may be adapted to notify the master device by polling or event-based signaling over the data bus. This allows easy realization of the proposed dual transmission scheme since the bus master is in control of the added high-speed sessions.

According to a third option which can be combined with the first or second option, a high-threshold receiver may be provided for receiving low-speed data transmitted via the data bus at a voltage level above or equal to the lowest detection threshold level. The combined provision of low and high-threshold receivers provides an option for detecting the status of bus clamping by comparing respective output signals of the low and high-threshold receivers.

According to a fourth option which can be combined with any one of the first to third options, the bus clamp circuit may comprise a voltage limitation element, such as a Zener diode or a limitation circuit or the like, adapted to restrict a voltage swing of the transmission voltage on the data bus, and a switching element that activates the voltage limitation element and that is controlled by the mode control signal. This measure allows simple and reliable implementation of the bus clamping function.

According to a fifth option which can be combined with any one of the first to fourth options, the clamping of the bus clamp circuit may be restricted to a predetermined maximum time duration allowed for high-speed data transmission over the data bus. Thereby, the duration of the high-speed transmission can be matched to maximum allowed bus idle periods so as to prevent bus error conditions.

It is noted that the above transmitting and receiving apparatuses may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the transmitting apparatus of claim 1, the slave device of claim 4, the receiving apparatus of claim 5, the master device of claim 9, the luminaire device of claim 11, the system of claim 12, the transmitting method of claim 13, the receiving method of claim 14, and the computer program product of claim 15 may have similar and/or identical preferred embodiments, in particular, as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows schematic architectures of addressable lighting networks for indoor and outdoor luminaires, respectively;
Fig. 2 shows a schematic block diagram of a master device according to a first embodiment;
Fig. 3 shows a schematic block diagram of a master device according to a second embodiment:
Fig. 4 shows an exemplary circuit diagram of a bus-type transmission system with selectable data rate according to a third embodiment;
Fig. 5 shows signaling diagrams with waveforms of low data rate signaling followed by high data rate communication;
Fig. 6 shows signaling diagrams zoomed in to show part of the high data rate communication at higher resolution; and
Fig. 7 shows a schematic flow diagram of a procedure according to a fourth embodiment for enhancing data rate on a data bus.

### DETAILED DESCRIPTION OF EMBODIMENTS

Embodiments of the present invention will be described below based on a DALI architecture of a lighting network.

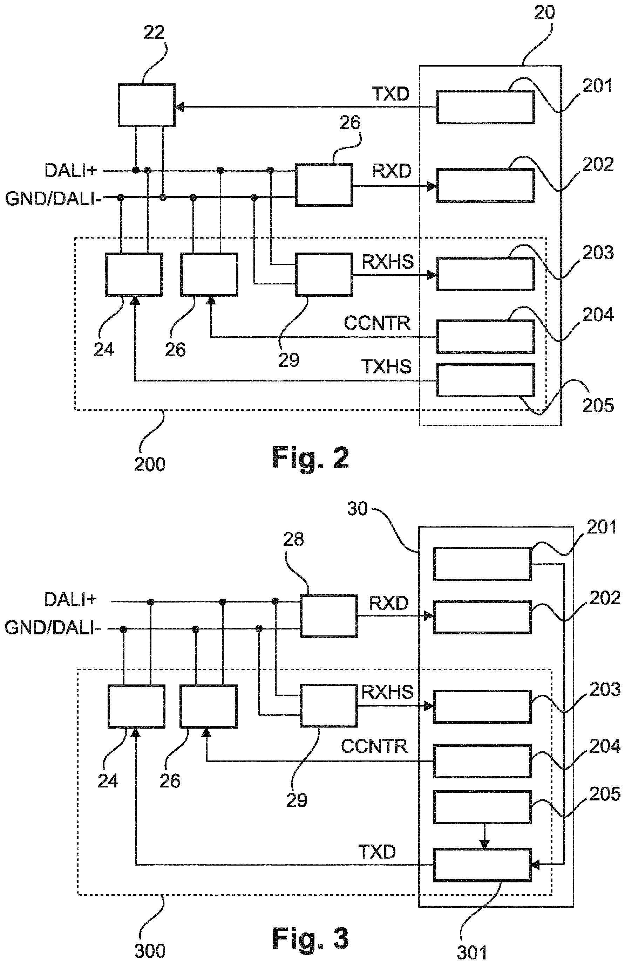

Fig. 2 shows a schematic block diagram of a proposed communication architecture of a master device according to a first embodiment to allow high-speed data transfer over DALI bus lines DALI+ and GND/DALI-. The master device comprises a first bus driver 22 and a conventional DALI (high) threshold receiver 28 for low-speed communication. Additionally, a microcontroller 20 is provided as a control unit for implementing a conventional DALI encoder 201 which generates low-rate transmission data TXD supplied to the first bus driver 22. Furthermore, the microcontroller 20 implements a conventional DALI decoder 202 which receives low-rate reception data RXD outputted from the DALI threshold receiver 28.

In addition, a high-level functional architecture of the proposed communication data-rate enhancement concept according to the first embodiment is shown in Fig. 2, wherein the above conventional DALI architecture is augmented with an additional high-speed communication section 200 comprising additional components, such as a second bus driver 24, a bus clamp circuit 26, a low-threshold receiver 29 and corresponding additional resources implemented in the microcontroller 20, such as a high-speed encoder 205, a mode selector 204 and a high-speed decoder 203. When high-speed communication needs to take place, which may be signalled by a slave device to the master device via the data bus, the mode selector 204 activates a clamp control signal CCNTR supplied to the bus clamp circuit 26.

Even though all devices connected to the data bus that can operate in high-speed mode could be adapted to activate the bus clamp circuit 26, it is preferred to do this only at the master device to avoid unnecessary racing conditions on the DALI bus.

When the bus clamp function of the bus clamp circuit 26 is activated so as to limit the signalling voltage on the DALI bus to a level below the lowest threshold level, the DALI threshold receiver 28 cannot receive the limited low-level signal on the DALI bus and therefore outputs a low-speed reception signal RXD = "0", while the low-threshold receiver 29 can receive the low-level signal and outputs a high-speed reception signal RXHS = "1". These logical states of the output signals RXD and RXHS indicate to the respective decoders 202, 203 of the microcontroller 20 that the bus is ready for high-speed operation and requesting slave(s) can start their high-speed data transfer at low voltage level if allowed by the bus master. Optionally, it is also possible to monitor the analog bus voltage level directly to detect if the bus is ready.

Fig. 3 shows a schematic block diagram of a proposed communication architecture of a master device according to a second embodiment to allow high-speed data transfer over DALI bus lines DALI+ and GND/DALI-. Same components as those shown in Fig. 2 are denoted by the same reference signs and are not described again. In the second embodiment, shared (hardware) resources for both normal DALI and high-data rate communication are provided. As shown in Fig. 3, it is also possible to share resources for normal DALI and high-speed communication. As an example, the bus driver is the simplest module to be shared. Thus, the first bus driver 22 in Fig. 2 can be omitted and low-speed transmission date can also be supplied to the DALI bus via the second bus driver (combined bus driver) 24 of a high-speed communication section 300 with shared resources. To achieve this, a multiplexer 301 can be implemented in an enhanced microcontroller 30 to provide a selective switching function for switching either the high-speed data generated by the high-speed encoder 205 or the low-speed date generated by the conventional DALI encoder 201 to the combined bus driver 24 in dependence on the detected type of transmission speed.

Even though the two receivers 28 and 29 could also be combined by making the threshold adaptive (e.g., by using the clamp control signal CCNTR), it is advantageous to keep them separate to be able to use the feature of bus state monitoring via the reception signal RXD and RXHS, as explained above.

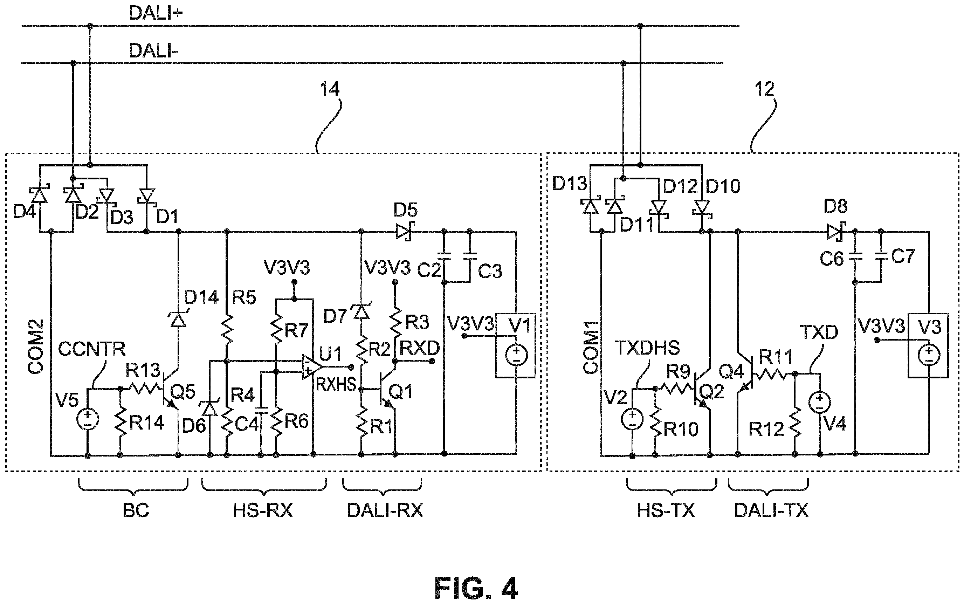

Fig. 4 shows an exemplary circuit diagram of a bus-type transmission system with selectable data rate according to a third embodiment.

It is noted that only those circuit components of a master device 14 and a slave devices 12 of the transmission system are shown that are useful for explaining the present invention are shown in Fig. 4. The master and slave devices 14 and 12 are coupled to the DALI bus by respective diode circuits consisting of Schottky diodes D1 to D4 and D10 to D13, respectively. The signal voltages of the master device 14 are referenced to reference potential COM2, while the signal voltages of the slave device 12 are referenced to reference potential COM1.

In case of the master device 14, the bus clamp circuit (BC) is realized by using a Zener diode D14 as voltage limitation element that restricts the voltage swing of the DALI bus (bus lines DALI+ and DALI-) and a transistor switch Q5 that is controlled by the clamp control signal CCNTR supplied from a voltage source V5 which represents the mode selector 204 in Figs. 2 and 3.

High-speed receiving (HS-RX) is realized by using a comparator U1 with a low detection threshold level at one input set by resistors R6 and R7 to divide a supply voltage V3V3 to a suitable voltage level as determined by the low detection threshold level. The other input of the comparator U1 is connected to the clamped bus voltage divided by voltage dividing resistors R4 and R5 and protected by another Zener diode D6. The comparator U1 outputs the high-speed reception signal RXHS.

By contrast, the normal DALI receiver (DALI-RX) has a higher threshold level due to a further Zener diode D7 with higher clamping level. It is realized by a transistor Q1 and outputs the normal DALI reception signal RXD.

Also shown is an optional power extraction unit using rectifier Schottky diode D5 and filter capacitors C2 and C3 and a voltage down converter V1 which generates the supply voltage V3V3 (e.g. 3.3V).

On the slave side, separate transmitting circuits (HS-TX and DALI-TX) with respective transistors Q2 and Q4 are shown for a high-rate signal TXDHS (supplied from a voltage source V2 which represents the high-speed encoder) and a low-rate DALI signal TXD (supplied from a voltage source V4 which represents the DALI encoder). The transmitting circuits could optionally be combined if needed.

Similar to the master device 14, the slave device 12 may comprise an optional power extraction unit using rectifier Schottky diode D8 and filter capacitors C6 and C7 and a voltage down converter V3 which generates the supply voltage V3V3 (e.g. 3.3V) for the circuitry.

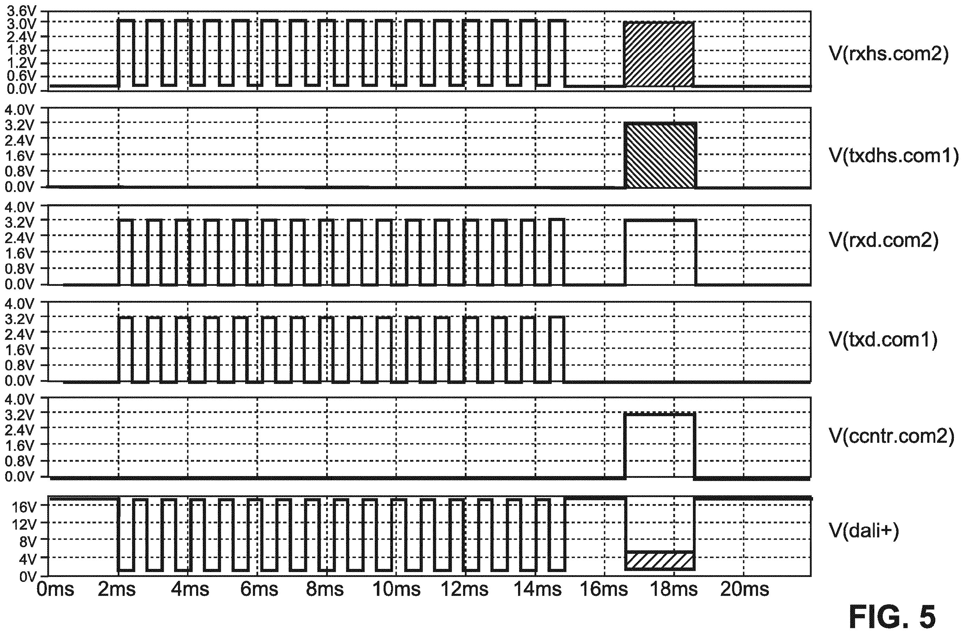

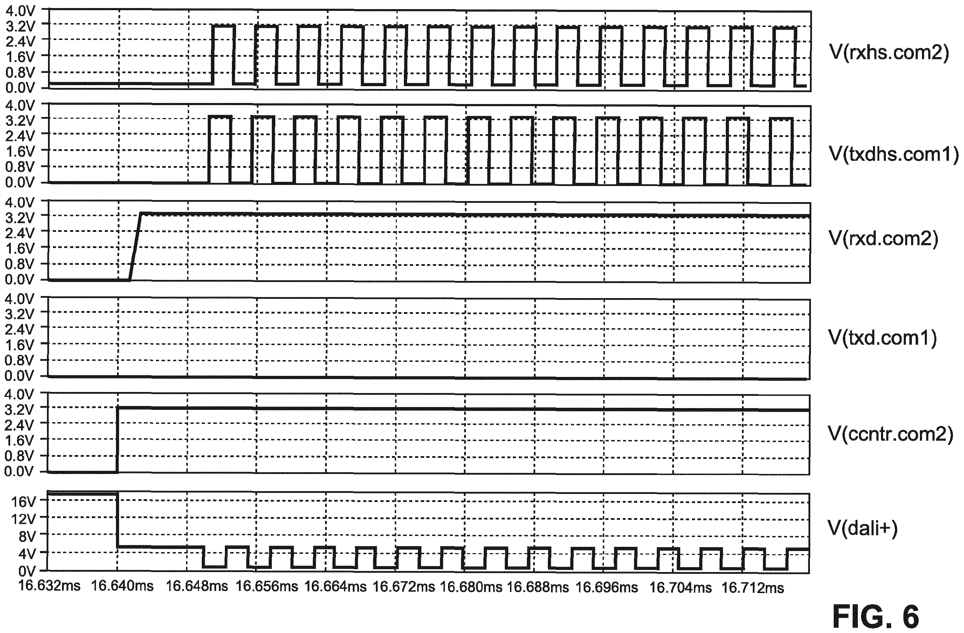

To verify the circuit operation, a simulation setup was built using models for a DALI power supply and respective sensor modules. The simulation results are shown in Figs. 5 and 6.

Fig. 5 shows signaling diagrams with waveforms of voltages of the signals RXHS (V(rxhs.com2)), TXDHS (V(txdhs.coml)), RXD (V(rxd.com2)), TXD (V(txd.coml)) and CCNTR (V(ccntr.com2)) and the bus voltage (V(dali+)) in case of a low data rate signaling followed by high data rate communication.

During the initial normal DALI transmission phase from 0 to 16.5ms, the bus master doesn't activate the bus clamp (i.e. CCNTR = "0") so that the signal voltage on the DALI bus is at its highest voltage level (e.g. about 16V). By activating the signal TXD at 2ms, the slave device puts a low frequency (e.g. 1200 Hz) signal on the DALI bus which is properly detected by the high-threshold receiver at the master side (RXD). Actually, the low-threshold receiver also detects the DALI rate pulses (as shown by RXHS). However this signal is not further processed by the microcontroller as the DALI signalling protocol (i.e. Manchester encoding) is not directly compatible with the high-speed signalling protocol (e.g. Universal Asynchronous Receiver Transmitter (UART) protocol) used for decoding pulses in high-speed mode.

The bus clamping is activated at 16.5ms after the CCNTR signal has been set to "1" following which a high-speed (e.g. 200 kHz) signal is put on the DALI bus when the slave device activates the TXDHS signal. The clamped low voltage level on the bus from 16.5ms to 18.5ms can be seem as a hatched area in the lowest waveform of Fig. 5. On the receiver side (the master module), the high-speed data is properly detected as shown by the RXHS waveform. During this interval the normal DALI output RXD of the master module simply stays at logic "1" level indicating that normal DALI devices are not disturbed.

Fig. 6 shows signaling diagrams zoomed in to show part of the high data rate communication from 16.6ms to 16.7ms at higher resolution.

The lowest waveform in Fig. 6 signal shows the bus voltage clamped to the low level (e.g. about 5V) when the CCNTR signal is activated. The normal DALI received signal (RXD) stays at logic "1" when the high data rate pulses are transmitted over the bus.

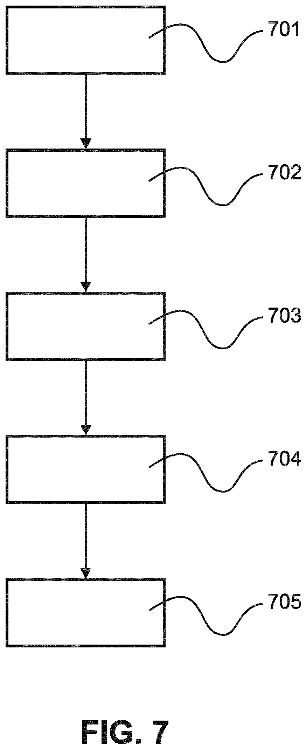

Fig. 7 shows a schematic flow diagram of a procedure according to a fourth embodiment for enhancing data rate on a data bus.

Respective parts of the procedure can be performed by a controller or processor provided in a master or slave device (e.g. luminaire device of an addressable lighting network) so as to temporary enhance data rates for transmission.

Initially, in step 701, a slave device notifies a bus master of a need for high-speed communication over the data bus. Then, in step 702, responsive to a receipt of the notification, the bus master activates a bus clamp control so as to limit the signaling voltage on the data bus to a level below the lowest detection threshold of usual low-speed transmission. In the subsequent step 703, the slave node detects the reduced voltage level on the data bus and starts high-speed signaling. In step 704, the detection threshold at the receiving side (master device or addressed other slave device) of the transmission is correspondingly lowered to match the new operating voltage range for high-speed transmission. Finally, in step 705, the received high-speed signal is decoded at the receiving side.

In the above embodiments, the time multiplexing of the DALI bus for normal and high-speed data communication can be controlled by a protocol sequence that can be observed by devices connected to the bus. The proposed master-slave arrangement eases realization of the proposed scheme since the bus master is in control of the starting and stopping of high-speed sessions. Either polling or event based protocol signalling can be adopted to let the master device know if a slave has important data to be transferred as high-speed data. Such a polling or initial event signalling could be run at normal DALI data rate.

In general, the notification (e.g. request or command) for high-speed signaling can be done in various ways. Respective control signalling (e.g. control packets) can both be in low and high-speed modes. For example, the notification for initiation of high-speed mode can be sent via low-speed signaling while a notification to end high-speed signaling can be done using high-speed signaling since the concerned devices are then already in high-speed mode. Although high-speed signaling is initiated after the clamp-voltage is detected, the decision to clamp the voltage can be initated when there is a need for high-speed communication. This need may be identified by an event or polling that uses the low-speed signaling. As mentioned above, it is optionally possible to also notify end of high-speed mode by sending a control packet or by another signaling. However, it is also possible to deduce this by simply monitoring the bus voltage level. I.e., if it returns to the highest level, this means that the temporary high-speed mode has ended.

In a first example, the master could poll slaves in low-speed mode to check if they have data that needs to be transferred at high-speed, and slaves could indicate their interest using the same low speed mode. In response, the master activates the bus clamping functionality, which will be noticed by slaves that are capable of high-speed signaling.

In an alternative second example, if the master wants to send data or software update in high-speed mode, it could either inform the concerned slave(s) via a control signaling in low-speed signaling mode and then do the bus clamp to start high-speed signaling, or, alternatively, it could directly start the high-speed mode by clamping the bus so that high-speed capable slaves can prepare themselves for incoming packets. With regard to efficient utilization of the available bus time slot, the second approach provides the advantage of avoiding time-consuming negotiation time spent in low-speed signaling.

Thus, high-speed communication can also be initiated by a master device. Then, a way of initiating high-speed mode could be to first send a special command using the low-speed mode so that all devices (slave/master) that can handle high-speed will prepare for it. After a certain time of sending the initiation command, the bus clamping can be activated and communication can start.

Furthermore, the duration of high-data rate communication can be adjusted to match the limit allowed by the DALI protocol so as to prevent bus error conditions. According to User Manual UM1629 for STM32L1xx DALI slave interface (DocID024499 Rev 1) of STMicroelectronics, January 2014, and Beckhoff's DALI Connectivity Library (TF8000 TC3), no error is generated if the DALI bus loses its IDLE state (bus voltage > 9.5V) for at most 500 ms. This is long enough to send a decent amount of data at the high-data rate. Thus, by making sure the bus returns to IDLE state before the timeout interval, it is possible to have successive sessions of high-speed communication. Moreover, as long as there is enough time left to do high-speed transmission, a second high-speed request could also be accomodated. Such multiple high-speed transactions can be handled without returning to the low-speed mode by releasing the bus clamp. This s advantageous in that the available transmission time can be utilized more effectively.

A timer can be used to make sure that the bus is not clamped longer than what is allowed by the bus protocol (e.g. DALI protocol). Thus, a single one or multiple high-speed transactions can be scheduled depending on the available time.

Of course, the suggested temporary selective high-speed transmission is not intended to be restricted to DALI lighting networks. Any addressable lighting network with master-slave architecture can be used for implementing the proposed non-disruptive enhancement.

To summarize, a signaling system, methods and computer program products for increasing data rate of addressable lighting networks (e.g. DALI networks) have been described. A bus clamping technique is suggested to allow fast data communication without affecting operation of normal network devices. The proposed scheme is useful in applications such as outdoor luminaires where the network data rate is too low for use cases that require real-time microphone or image data transfer, for example.

While the invention has been illustrated and described in detail in the drawings and foregoing description, such illustration and description are to be considered illustrative or exemplary and not restrictive. The invention is not limited to the disclosed embodiments. The proposed high-speed transmission can be applied to other types of networks and with other types of signals. The proposed idea could be applied in other applications where occasional data rate enhancement is required in otherwise low-data rate systems.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage.

The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

A single unit or device may fulfill the functions of several items recited in the claims. The mere fact that certain measures are recited in mutually different dependent claims does not indicate that a combination of these measures cannot be used to advantage.

The described operations like those indicated in Fig. 7 can be implemented as program code means of a computer program and/or as dedicated hardware. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. A transmitting apparatus for transmitting data over a Digital Addressable Lighting Interface, DALI, standard data bus of an addressable lighting network, said transmitting apparatus comprising:
- a notification unit (20; 30) for notifying a request for high-speed data transmission in order to trigger a clamping of the transmission voltage level on the data bus below a lowest detection threshold level used for low-speed data transmission on the data bus by a further device on the data bus having a clamping unit, so that a conventional DALI receiver for low-speed communication cannot detect data on the data bus;
- a low-speed transmission unit (201) for transmitting data via the data bus at a voltage level greater than or equal to the lowest detection threshold level and based on a low-speed transmission protocol; and
- a high-speed transmission unit (205) for initiating high-speed data transmission via the data bus based on a high-speed transmission protocol in response to a detection of a reduced voltage level on the data bus, which is below the lowest detection threshold level used for low-speed data transmission on the data bus.

2. The apparatus of claim 1, wherein the apparatus comprises a multiplexer (301) for selectively providing low-speed transmission data generated by the low-speed transmission unit (201) or high-speed transmission data generated by the high-speed transmission unit (205) to a bus driver (24) connected to the data bus.

3. The apparatus of claim 1 or 2, wherein the notification unit (20; 30) is adapted to notify a master device (14) of the data bus by polling or event-based signaling over the data bus.

4. A slave device for transmitting or receiving data over a Digital Addressable Lighting Interface, DALI, standard data bus of an addressable lighting network, wherein the slave device (12-1, 12-2) comprises an apparatus of claim 1.

5. A receiving apparatus for receiving data over a Digital Addressable Lighting Interface standard, DALI, data bus of an addressable lighting network comprising:
- a mode selector (204) for activating a mode control signal in response to a detected request for high-speed transmission on the data bus;
- a bus clamp circuit (26) for clamping a transmission voltage on the data bus to a level below a lowest detection threshold level used for low-speed data transmission on the data bus, in response to an activation of the mode control signal, so that a conventional DALI receiver for low-speed communication cannot detect data on the data busand
- a low-threshold receiver (29) for receiving high-speed data transmitted via the data bus at a voltage level below the lowest detection threshold level used for low-speed data transmission on the data bus and based on a high-speed transmission protocol.

6. The apparatus of claim 5, further comprising a high-threshold receiver (28) for receiving low-speed data transmitted via the data bus at a voltage level above or equal to the lowest detection threshold level used for low-speed data transmission on the data bus and based on a low-speed transmission protocol.

7. The apparatus of claim 5, wherein the bus clamp circuit (26) comprises a voltage limitation element (D14) adapted to restrict a voltage swing of the transmission voltage on the data bus and a switching element (Q4) that activates the voltage limitation element (D14) and that is controlled by the mode control signal.

8. The apparatus of claim 5, wherein the apparatus is adapted to restrict the clamping of the bus clamp circuit (26) to a predetermined maximum time duration allowed for an idle state on the data bus.

9. A master device (10, 14; 11, 14) for connection to a Digital Addressable Lighting Interface, DALI, standard data bus of an addressable lighting network, wherein the master device comprises at least one of a transmitting apparatus of claim 1 and a receiving apparatus of claim 5.

10. The master device of claim 9, further comprising a power supply unit for supplying power via the data bus to connected master or slave devices.

11. A luminaire device connectable to an addressable lighting network via a Digital Addressable Lighting Interface standard data bus, the luminaire device comprising a slave device of claim 4 or a master device of claim 9.

12. A system for transmitting data over a Digital Addressable Lighting Interface, DALI, standard data bus of an addressable lighting network, said system comprising:
- a transmitting apparatus according to claim 1 for transmitting data over the DALI data bus and
- a receiving apparatus according to claim 5 for receiving data over the DALI data bus.

13. A method of transmitting data over a Digital Addressable Lighting Interface, DALI, standard data bus of an addressable lighting network, the method comprising:
- notifying (701) a master device (10, 14; 11, 14) of the data bus about a need for high-speed data transmission in order to trigger a clamping of the transmission voltage level on the data bus below a lowest detection threshold level used for low-speed data transmission on the data bus, so that a conventional DALI receiver for low-speed communication cannot detect data on the data bus; and
- initiating (703) high-speed data transmission via the data bus based on a high-speed transmission protocol in response to a detection of a reduced voltage level on the data bus, which is below the lowest detection threshold level used for low-speed data transmission on the data bus.

14. A method of receiving data from a Digital Addressable Lighting Interface, DALI, standard data bus of an addressable lighting network, the method comprising:
- activating (702) a mode control signal in response to a detected request for high-speed transmission on the data bus;
- clamping a transmission voltage on the data bus to a level below a lowest detection threshold level used for low-speed data transmission based on a low-speed transmission protocol on the data bus, in response to an activation of the mode control signal, so that a conventional DALI receiver for low-speed communication cannot detect data on the data bus and
- receiving (704) high-speed data transmitted via the data bus at a voltage level below the lowest detection threshold level used for low-speed data transmission on the data bus and based on a high-speed transmission protocol.

15. A computer program product comprising code means for producing the steps of claim 13 or 14 when run on a computer device.

## Patentansprüche

1. Übertragungseinrichtung zum Übertragen von Daten über einen digitalen adressierbaren Beleuchtungsschnittstellen-, DALI-Standard-Datenbus eines adressierbaren Beleuchtungsnetzwerks, wobei die Übertragungseinrichtung umfasst:
- eine Benachrichtigungseinheit (20; 30) zum Benachrichtigen über eine Anfrage nach einer Hochgeschwindigkeitsdatenübertragung, um ein Klemmen der Übertragungsspannungsstufe auf dem Datenbus unter einer niedrigsten Erkennungsgrenzwertstufe auszulösen, die für Niedergeschwindigkeitsdatenübertragung auf dem Datenbus durch eine weitere Vorrichtung auf dem Datenbus verwendet wird, der eine Klemmeinheit aufweist, sodass ein herkömmlicher DALI-Empfänger für Niedergeschwindigkeitskommunikation keine Daten am Datenbus erkennen kann;
- eine Niedergeschwindigkeitsübertragungseinheit (201) zum Übertragen von Daten über den Datenbus auf einer Spannungsstufe größer oder gleich der niedrigsten Erkennungsgrenzwertstufe und basierend auf einem Niedergeschwindigkeitsübertragungsprotokoll; und
- eine Hochgeschwindigkeitsübertragungseinheit (205) zum Initiieren von Hochgeschwindigkeitsdatenübertragung über den Datenbus basierend auf einem Hochgeschwindigkeitsübertragungsprotokoll als Reaktion auf eine Erkennung einer reduzierten Spannungsstufe auf dem Datenbus, die unter der niedrigsten Erkennungsgrenzwertstufe ist, die für Niedergeschwindigkeitsdatenübertragung auf dem Datenbus verwendet wird.

2. Einrichtung nach Anspruch 1, wobei die Einrichtung einen Multiplexer (301) zur selektiven Bereitstellung von Niedergeschwindigkeitsübertragungsdaten, die durch die Niedergeschwindigkeitsübertragungseinheit (201) generiert werden, oder Hochgeschwindigkeitsübertragungsdaten, die von der Hochgeschwindigkeitsübertragungseinheit (205) generiert werden für einen Bustreiber (24), der mit dem Datenbus verbunden ist, umfasst.

3. Einrichtung nach Anspruch 1 oder 2, wobei die Benachrichtigungseinheit (20; 30) ausgeführt ist, um eine Master-Vorrichtung (14) des Datenbusses durch Abfrage oder ereignisbasierte Signalisierung über den Datenbus mitzuteilen.

4. Slave-Vorrichtung zum Übertragen oder Empfangen von Daten über einen digitalen adressierbaren Beleuchtungsschnittstellen-, DALI-Standard-Datenbus eines adressierbaren Beleuchtungsnetzwerks, wobei die Slave-Vorrichtung (12-1, 12-2) eine Einrichtung nach Anspruch 1 umfasst.

5. Empfangseinrichtung zum Empfangen von Daten über einen digitalen adressierbare Beleuchtungsschnittstellen-, DALI-Standard-Datenbus eines adressierbaren Beleuchtungsnetzwerks, umfassend:
- einen Modus-Selektor (204) zum Aktivieren eines Modus-Steuerungssignals als Reaktion auf eine erkannte Anfrage nach einer Hochgeschwindigkeitsdatenübertragung auf dem Datenbus;
- eine Bus-Klemmschaltung (26) zum Klemmen einer Übertragungsspannung auf dem Datenbus auf einer Stufe unter einer niedrigsten Erkennungsgrenzwertstufe, die für Niedergeschwindigkeitsdatenübertragung auf dem Datenbus verwendet wird, als Reaktion auf eine Aktivierung des Modus-Steuerungssignals, sodass ein herkömmlicher DALI-Empfänger für Niedergeschwindigkeitskommunikation keine Daten auf dem Datenbus erkennen kann, und
- einen Niedergrenzwert-Empfänger (29) zum Empfangen von Hochgeschwindigkeitsdaten, die über den Datenbus auf einer Spannungsstufe unter der niedrigsten Erkennungsgrenzwertstufe übertragen werden, die für Niedergeschwindigkeitsdatenübertragung auf dem Datenbus verwendet wird, und basierend auf einem Hochgeschwindigkeitsübertragungsprotokoll.

6. Einrichtung nach Anspruch 5, weiter einen Hochgrenzwert-Empfänger (28) zum Empfangen von Niedergeschwindigkeitsdaten umfassend, die über den Datenbus auf einer Spannungsstufe höher oder gleich der niedrigsten Erkennungsgrenzwertstufe übertragen werden, die für Niedergeschwindigkeitsdatenübertragung auf dem Datenbus verwendet werden, und basierend auf einem Niedergeschwindigkeitsübertragungsprotokoll.

7. Einrichtung nach Anspruch 5, wobei die Bus-Klemmenschaltung (26) ein Spannungsbegrenzungselement (D14) umfasst, das ausgeführt ist, um eine Spannungsschwankung der Übertragungsspannung auf dem Datenbus zu beschränken, und ein Schaltelement (Q4), welches das Spannungsbegrenzungselement (D14) aktiviert und durch das Modus-Steuerungssignal gesteuert wird.

8. Einrichtung nach Anspruch 5, wobei die Einrichtung ausgeführt ist, um die Klemmung der Bus-Klemmschaltung (26) auf eine vorbestimmte maximale erlaubte Zeitdauer für einen Ruhezustand am Datenbus zu beschränken.

9. Master-Vorrichtung (10, 14; 11, 14) zur Verbindung mit einem digitalen adressierbaren Beleuchtungsschnittstellen-, DALI-Standard-Datenbus eines adressierbaren Beleuchtungsnetzwerks, wobei die Master-Vorrichtung mindestens eines von einer Übertragungseinrichtung nach Anspruch 1 und einer Empfangseinrichtung nach Anspruch 5 umfasst.

10. Master-Vorrichtung nach Anspruch 9, weiter eine Stromversorgungseinheit zur Stromversorgung über den Datenbus der verbundenen Master- oder Slave-Vorrichtung umfassend.

11. Leuchten-Vorrichtung, die über einen digitalen adressierbaren Beleuchtungsschnittstellen-Standard-Datenbus mit einem adressierbaren Beleuchtungsnetzwerk verbindbar ist, wobei die Leuchten-Vorrichtung eine Slave-Vorrichtung nach Anspruch 4 oder eine Master-Vorrichtung nach Anspruch 9 umfasst.

12. System zum Übertragen von Daten über einen digitalen adressierbaren Beleuchtungsschnittstellen-, DALI-Standard-Datenbus eines adressierbaren Beleuchtungsnetzwerks, wobei das System umfasst:
- eine Übertragungseinrichtung nach Anspruch 1, zum Übertragen von Daten über den DALI-Datenbus, und
- eine Empfangseinrichtung nach Anspruch 5 zum Empfangen von Daten über den DALI-Datenbus.

13. Verfahren zum Übertragen von Daten über einen digitalen adressierbaren Beleuchtungsschnittstellen-, DALI-Standard-Datenbus eines adressierbaren Beleuchtungsnetzwerks, wobei das Verfahren umfasst:
- Benachrichtigen (701) einer Mastervorrichtung (10, 14; 11, 14) des Datenbusses über einen Bedarf an Hochgeschwindigkeitsdatenübertragung, um ein Klemmen der Übertragungsspannungsstufe auf dem Datenbus unter einer niedrigsten Erkennungsgrenzwertstufe auszulösen, die für Niedergeschwindigkeitsdatenübertragung auf dem Datenbus durch eine weitere Vorrichtung auf dem Datenbus verwendet wird, die eine Klemmeinheit aufweist, sodass ein herkömmlicher DALI-Empfänger für Niedergeschwindigkeitskommunikation keine Daten am Datenbus erkennen kann; und
- Initiieren (703) von Hochgeschwindigkeitsdatenübertragung über den Datenbus basierend auf einem Hochgeschwindigkeitsübertragungsprotokoll als Reaktion auf eine Erkennung einer reduzierten Spannungsstufe auf dem Datenbus, die unter der untersten Erkennungsgrenzwertstufe ist, die für Niedergeschwindigkeitsdatenübertragung auf dem Datenbus verwendet wird.

14. Verfahren zum Empfangen von Daten über einen digitalen adressierbaren Beleuchtungsschnittstellen-, DALI-Standard-Datenbus eines adressierbaren Beleuchtungsnetzwerks, wobei das Verfahren umfasst:
- Aktivieren (702) eines Modus-Steuerungssignals als Reaktion auf eine erkannte Anfrage nach einer Hochgeschwindigkeitsdatenübertragung auf dem Datenbus;
- Klemmen einer Übertragungsspannung auf dem Datenbus auf einer Stufe unter einer niedrigsten Erkennungsgrenzwertstufe, die für Niedergeschwindigkeitsdatenübertragung auf dem Datenbus verwendet wird, als Reaktion auf eine Aktivierung des Modus-Steuerungssignals, sodass ein herkömmlicher DALI-Empfänger für Niedergeschwindigkeitskommunikation keine Daten auf dem Datenbus erkennen kann,
und
- Empfangen (704) von Hochgeschwindigkeitsdaten, die über den Datenbus auf einer Spannungsstufe unter der niedrigsten Erkennungsgrenzwertstufe übertragen werden, die für Niedergeschwindigkeitsdatenübertragung auf dem Datenbus verwendet wird, und basierend auf einem Hochgeschwindigkeitsübertragungsprotokoll.

15. Computerprogrammprodukt, Codemittel zum Produzieren der Schritte nach Anspruch 13 oder 14 umfassend, wenn es auf einer Computervorrichtung läuft.

## Revendications

1. Appareil de transmission pour transmettre des données sur un bus de données standard d'interface numérique d'éclairage adressable, DALI, d'un réseau d'éclairage adressable, ledit appareil de transmission comprenant :
- une unité de notification (20 ; 30) pour notifier une demande de transmission de données à grande vitesse afin de déclencher un calage du niveau de tension de transmission sur le bus de données en dessous d'un niveau seuil de détection le plus bas utilisé pour une transmission de données à basse vitesse sur le bus de données par un dispositif supplémentaire sur le bus de données ayant une unité de calage, de sorte qu'un récepteur DALI classique de communication à basse vitesse ne puisse pas détecter des données sur le bus de données ;
- une unité de transmission à basse vitesse (201) pour transmettre des données via le bus de données à un niveau de tension supérieur ou égal au niveau seuil de détection le plus bas et sur la base d'un protocole de transmission à basse vitesse ; et
- une unité de transmission à grande vitesse (205) pour lancer une transmission de données à grande vitesse via le bus de données sur la base d'un protocole de transmission à grande vitesse en réponse à une détection d'un niveau de tension réduit sur le bus de données, qui est en dessous du niveau seuil de détection le plus bas utilisé pour une transmission de données à basse vitesse sur le bus de données.

2. Appareil selon la revendication 1, dans lequel l'appareil comprend un multiplexeur (301) pour fournir sélectivement des données de transmission à basse vitesse générées par l'unité de transmission à basse vitesse (201) ou des données de transmission à grande vitesse générées par l'unité de transmission à grande vitesse (205) à un circuit pilote de bus (24) connecté au bus de données.

3. Appareil selon la revendication 1 ou 2, dans lequel l'unité de notification (20 ; 30) est adaptée pour notifier un dispositif maître (14) du bus de données par invitation à émettre ou signalisation à base d'événement sur le bus de données.

4. Dispositif esclave pour transmettre ou recevoir des données sur un bus de données standard d'interface numérique d'éclairage adressable, DALI, d'un réseau d'éclairage adressable, dans lequel le dispositif esclave (12-1, 12-2) comprend un appareil de la revendication 1.

5. Appareil de réception pour recevoir des données sur un bus de données standard d'interface numérique d'éclairage adressable, DALI, d'un réseau d'éclairage adressable, comprenant :
- un sélecteur de mode (204) pour activer un signal de commande de mode en réponse à une demande détectée de transmission à grande vitesse sur le bus de données ;
- un circuit de calage de bus (26) pour caler une tension de transmission sur le bus de données à un niveau en dessous d'un niveau seuil de détection le plus bas utilisé pour une transmission de données à basse vitesse sur le bus de données, en réponse à une activation du signal de commande de mode, de sorte qu'un récepteur DALI classique de communication à basse vitesse ne puisse pas détecter des données sur le bus de données et
- un récepteur à seuil bas (29) pour recevoir des données à grande vitesse transmises via le bus de données à un niveau de tension en dessous du niveau seuil de détection le plus bas utilisé pour une transmission de données à basse vitesse sur le bus de données et sur la base d'un protocole de transmission à grande vitesse.

6. Appareil selon la revendication 5, comprenant en outre un récepteur à seuil haut (28) pour recevoir des données à basse vitesse transmises via le bus de données à un niveau de tension supérieur ou égal au niveau seuil de détection le plus bas utilisé pour une transmission de données à basse vitesse sur le bus de données et sur la base d'un protocole de transmission à basse vitesse.

7. Appareil selon la revendication 5, dans lequel le circuit de calage de bus (26) comprend un élément de limitation de tension (D14) adapté pour restreindre une excursion de tension de la tension de transmission sur le bus de données et un élément de commutation (Q4) qui active l'élément de limitation de tension (D14) et qui est commandé par le signal de commande de mode.

8. Appareil selon la revendication 5, dans lequel l'appareil est adapté pour restreindre le calage du circuit de calage de bus (26) à une durée maximale prédéterminée admise pour un état inactif sur le bus de données.

9. Dispositif maître (10, 14 ; 11, 14) pour une connexion à un bus de données standard d'interface numérique d'éclairage adressable, DALI, d'un réseau d'éclairage adressable, dans lequel le dispositif maître comprend au moins l'un d'un appareil de transmission de la revendication 1 et d'un appareil de réception de la revendication 5.

10. Dispositif maître selon la revendication 9, comprenant en outre une unité d'alimentation électrique pour alimenter électriquement via le bus de données des dispositifs maître ou esclave connectés.

11. Dispositif luminaire pouvant être connecté à un réseau d'éclairage adressable via un bus de données standard d'interface numérique d'éclairage adressable, le dispositif luminaire comprenant un dispositif esclave de la revendication 4 ou un dispositif maître de la revendication 9.

12. Système de transmission de données sur un bus de données standard d'interface numérique d'éclairage adressable, DALI, d'un réseau d'éclairage adressable, ledit système comprenant :
- un appareil de transmission selon la revendication 1 pour transmettre des données sur le bus de données DALI et
- un appareil de réception selon la revendication 5 pour recevoir des données sur le bus de données DALI.

13. Procédé de transmission de données sur un bus de données standard d'interface numérique d'éclairage adressable, DALI, d'un réseau d'éclairage adressable, le procédé comprenant :
- la notification (701) d'un dispositif maître (10, 14 ; 11, 14) du bus de données concernant un besoin de transmission de données à grande vitesse afin de déclencher un calage du niveau de tension de transmission sur le bus de données en dessous d'un niveau seuil de détection le plus bas pour une transmission de données à basse vitesse sur le bus de données, de sorte qu'un récepteur DALI classique de communication à basse vitesse ne puisse pas détecter des données sur le bus de données ; et
- le lancement (703) d'une transmission de données à grande vitesse via le bus de données sur la base d'un protocole de transmission à basse vitesse en réponse à une détection d'un niveau de tension réduit sur le bus de données, qui est en dessous du niveau seuil de détection le plus bas utilisé pour une transmission de données à basse vitesse sur le bus de données.

14. Procédé de réception de données en provenance d'un bus de données standard d'interface numérique d'éclairage adressable, DALI, d'un réseau d'éclairage adressable, le procédé comprenant :
- l'activation (702) d'un signal de commande de mode en réponse à une demande détectée de transmission à grande vitesse sur le bus de données ;
- le calage d'une tension de transmission sur le bus de données à un niveau en dessous d'un niveau seuil de détection le plus bas utilisé pour une transmission de données à basse vitesse sur la base d'un protocole de transmission à basse vitesse sur le bus de données, en réponse à une activation du signal de commande de mode, de sorte qu'un récepteur DALI classique de communication à basse vitesse ne puisse pas détecter des données sur le bus de données et
- la réception (704) de données à grande vitesse transmises via le bus de données à un niveau de tension en dessous du niveau seuil de détection le plus bas utilisé pour une transmission de données à basse vitesse sur le bus de données et sur la base d'un protocole de transmission à grande vitesse.

15. Produit programme d'ordinateur comprenant des moyens de code pour produire les étapes de la revendication 13 ou 14 lorsqu'ils sont exécutés sur un dispositif d'ordinateur.
